# EUROPEAN PATENT APPLICATION

(11) **EP 4 297 512 A1**
(43) Date of publication of application: **27.12.2023**
(21) Application number: 22756372.3
(22) Date of filing: 14.01.2022
(51) Int. Cl.: H04W 72/12, H04W 72/10, H04W 72/04, H04W 76/28, H04W 76/14, H04W 92/18, H04W 28/02

(54) **METHOD AND DEVICE FOR TRANSMITTING ASSISTANCE INFORMATION IN NR V2X**

(30) Priority: 22.02.2021 KR 20210023507; 12.03.2021 KR 20210032937; 01.04.2021 KR 20210042795; 19.07.2021 KR 20210094315
(71) Applicant: LG Electronics Inc., Yeongdeungpo-gu Seoul 07336 (KR)
(72) Inventor: HONG, Jongwoo, Seoul 06772 (KR); BACK, Seoyoung, Seoul 06772 (KR); PARK, Giwon, Seoul 06772 (KR); SEO, Hanbyul, Seoul 06772 (KR); LEE, Seungmin, Seoul 06772 (KR)
(74) Representative: Mooser, Sebastian Thomas
(86) International application number: PCT/KR2022/000694
(87) International publication number: WO 2022/177167

(57) **Abstract**

Proposed in one embodiment is a method by which a first device carries out wireless communication. The method may comprise the steps of: establishing a connection between the first device and a second device; receiving, from the second device, a first sidelink (SL) discontinuous reception (DRX) configuration including information related to an SL DRX cycle and information related to an on-duration timer; and transmitting assistance information to the second device, on the basis of a configuration, which is related to DRX for the first device, having been changed. For example, the assistance information may include information related to SL DRX.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL PROBLEM

Meanwhile, in sidelink communication, a user equipment (UE) may assign a sidelink (SL) discontinuous reception (DRX) configuration to a peer UE, and vice versa, the peer UE may configure a SL DRX configuration to the UE. In this case, for example, the UE may request assistance information from the peer UE for the SL DRX configuration. For example, if a DRX configuration related to the peer UE is changed, the base station connected with the UE may not be able to determine the changed DRX configuration, and therefore, the peer UE may need to transmit the assistance information to the UE without a request for the assistance information.

In addition, for example, if a radio resource control (RRC) state of the UE is changed from an IDLE state to a CONNECTED state, the base station connected with the UE may need assistance information related to the DRX configuration of the peer UE in order to perform alignment of Uu DRX and SL DRX.

### TECHNICAL SOLUTION

In an embodiment, provided is a method for performing wireless communication by a first device. The method may comprise: establishing a connection between the first device and a second device; receiving, from the second device, a first sidelink (SL) discontinuous reception (DRX) configuration including information related to a SL DRX cycle and information related to an on-duration timer; and transmitting, to the second device, assistance information based on a change of a configuration related to DRX for the first device. For example, the assistance information may include information related to SL DRX.

In an embodiment, provided is a first device adapted to perform wireless communication. The first device may comprise: one or more memories storing instructions; one or more transceivers; and one or more processors connected to the one or more memories and the one or more transceivers, wherein the one or more processors execute the instructions to: establish a connection between the first device and a second device; receive, from the second device, a first sidelink (SL) discontinuous reception (DRX) configuration including information related to a SL DRX cycle and information related to an on-duration timer; and transmit, to the second device, assistance information based on a change of a configuration related to DRX for the first device. For example, the assistance information may include information related to SL DRX.

### ADVANTAGEOUS EFFECTS

The UE can efficiently align Uu discontinuous reception (DRX) and sidelink (SL) DRX by transmitting assistance information to another UE, if Uu DRX is changed, without requesting the assistance information.

In addition, if a radio resource control (RRC) state of the UE is changed from an IDLE state to a CONNECTED state, the UE requests assistance information from another UE, and the UE transmits the assistance information received from another UE to the base station, so that the base station can efficiently align Uu DRX and SL DRX.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows an example of performing a PC5 RRC connection between a UE and a peer UE, based on an embodiment of the present disclosure.
FIG. 9 shows an example of a PC5 RRC connection and an RRC state of a UE and a peer UE, based on an embodiment of the present disclosure.
FIG. 10 shows a procedure for transmitting, by a receiving UE, assistance information to a transmitting UE, based on an embodiment of the present disclosure.
FIG. 11 shows a procedure for transmitting, by a first device, assistance information to a second device, based on an embodiment of the present disclosure.
FIG. 12 shows a procedure for receiving, by a second device, assistance information from a first device, based on an embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, `when, if, or in case of may be replaced with `based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on 5G NR. However, technical features according to an embodiment of the present disclosure will not be limited only to this.

For terms and techniques not specifically described among terms and techniques used in the present disclosure, reference may be made to a wireless communication standard document published before the present disclosure is filed.

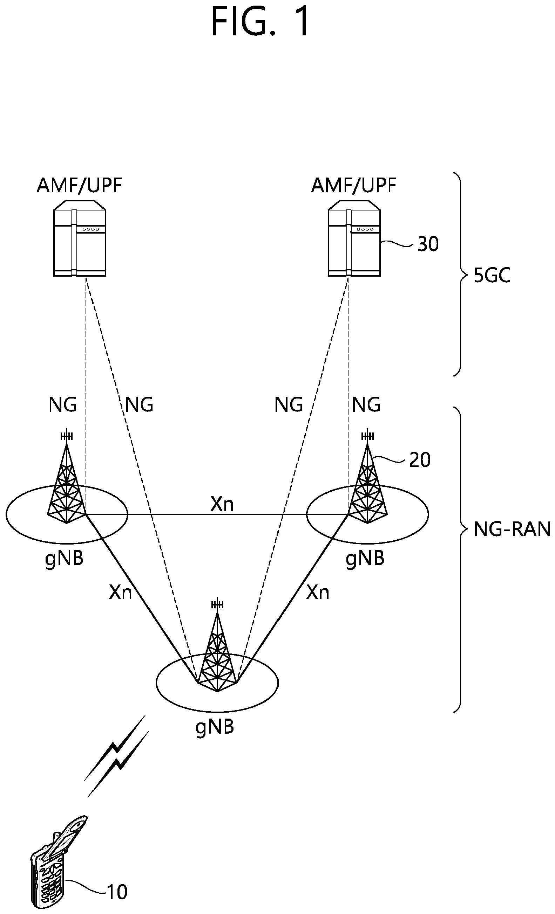

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

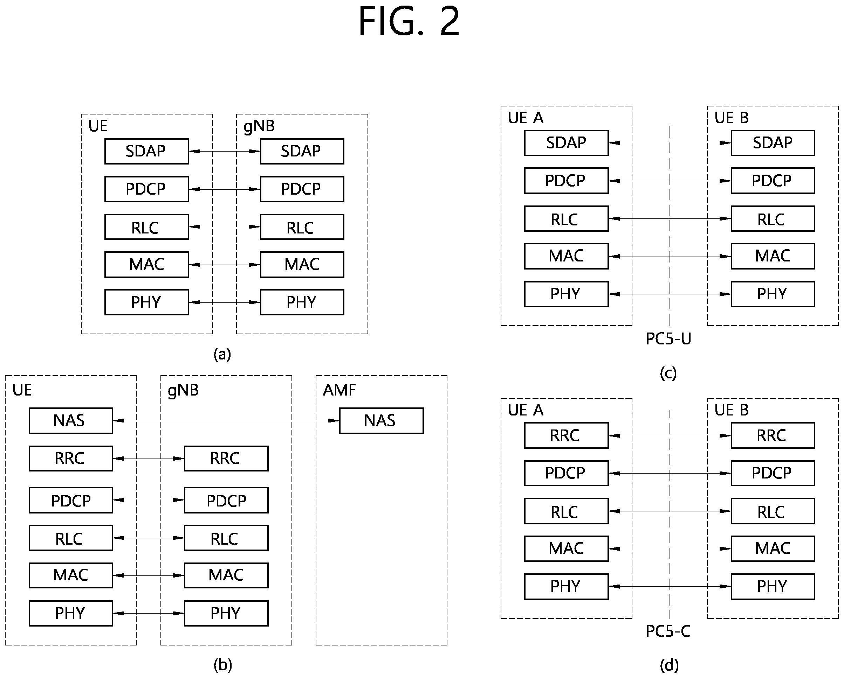

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

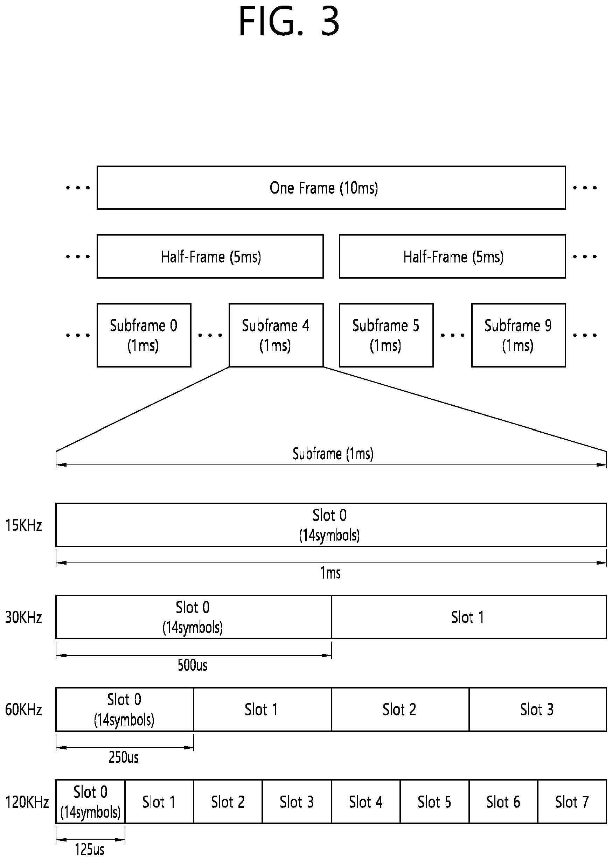

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15^{∗}2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15^{∗}2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

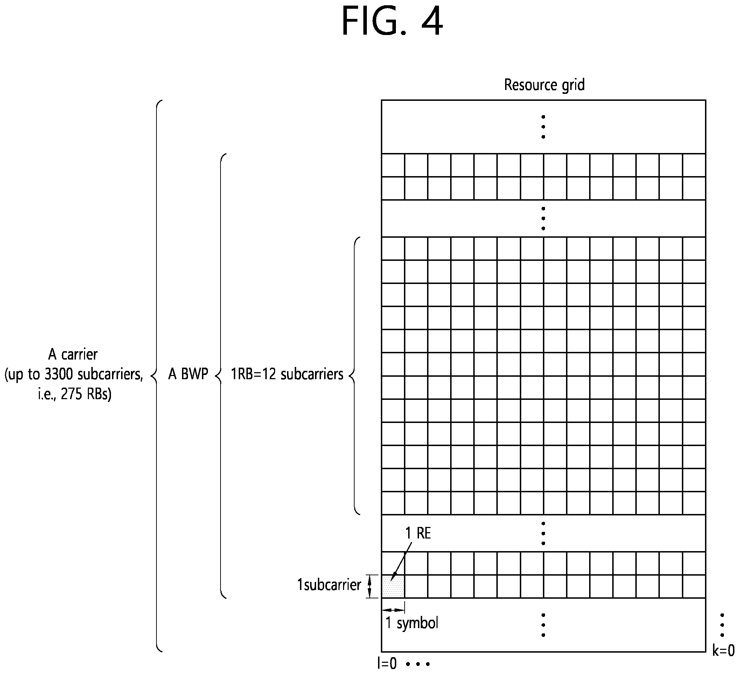

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

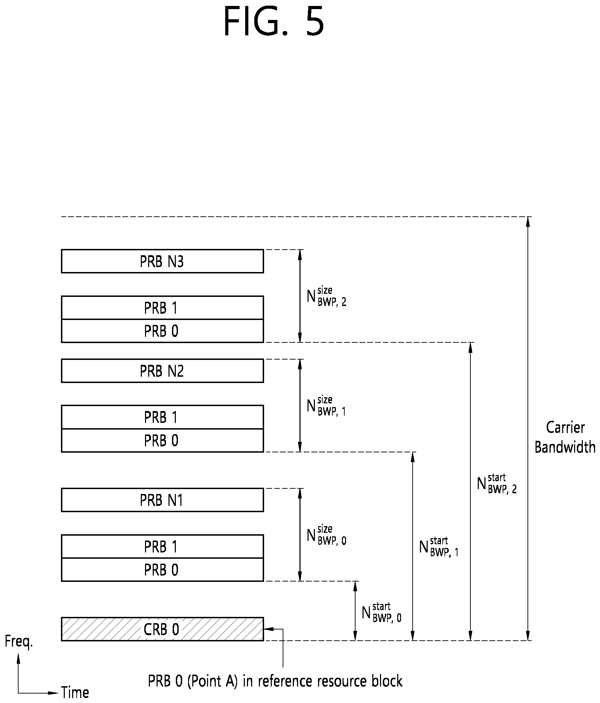

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

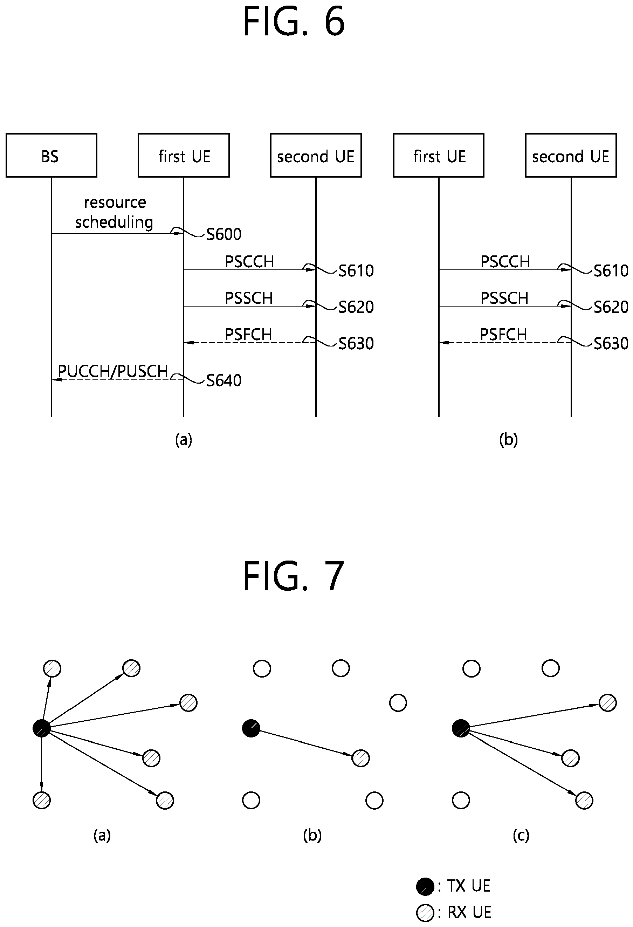

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂Nₚₐₜₜₑᵣₙ) bits, where Nₚₐₜₜₑᵣₙ is the number of DMRS patterns configured by higher layer parameter sl-PSSCH-DMRS-TimePattemList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described. SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described. SCI format 2-B is used for the decoding of PSSCH, with HARQ operation when HARQ-ACK information includes only NACK, or when there is no feedback of HARQ-ACK information.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource. Referring to (a) of FIG. 6, in step S640, the first UE may transmit SL HARQ feedback to the base station through the PUCCH and/or the PUSCH.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH}= 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{subch,slot}-1] PRBs from the M_{PRB,set}^{PSFCH} PRBs to slot i among the PSSCH slots associated with the PSFCH slot and subchannel j, where M^{PSFCH}_{subch,slot}= M^{PSFCH}_{PRB,set}/(N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting subchannel of the corresponding PSSCH
- N^{PSFCH}_{type} = N^{PSSCH}_{subch} and the N^{PSSCH}_{subch}·M^{PSFCH}_{sbch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 8.

**[Table 8]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a m_{cs} value, for computing a value of cyclic shift α, as in Table 9 if the UE detects a SCI format 2-A with Cast type indicator field value of "01" or " 10", or as in Table 10 if the UE detects a SCI format 2-B or a SCI format 2-A with Cast type indicator field value of " 11 ". The UE applies one cyclic shift from a cyclic shift pair to a sequence used for the PSFCH transmission.

**[Table 9]**

| HARQ-ACK Value | 0 (NACK) | 1 (ACK) |
|---|---|---|
| Sequence cyclic shift | 0 | 6 |

**[Table 10]**

| HARQ-ACK Value | 0 (NACK) | 1 (ACK) |
|---|---|---|
| Sequence cyclic shift | 0 | N/A |

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

For example, a SL DRX configuration may include one or more information listed below.

For example, *SL drx-onDurationTimer* may be information on the duration at the beginning of a DRX cycle. For example, the duration at the beginning of the DRX cycle may be information on the duration in which the UE operates in an active mode to transmit or receive sidelink data.

For example, *SL drx-SlotOffset* may be information on the delay before starting the *drx-onDurationTimer.*

For example, *SL drx-InactivityTimer* may be information on the duration after the PSCCH occasion in which a PSCCH indicates a new sidelink transmission and reception for the MAC entity. For example, if a transmitting UE indicates PSSCH transmission through a PSCCH, the transmitting UE may operate in an active mode while *SL drx-InactivityTimer* is running and may transmit a PSSCH to a receiving UE. Also, for example, if the receiving UE is instructed that the transmitting UE transmits a PSSCH through PSCCH reception, the receiving UE may operate in an active mode while *SL drx-InactivityTimer* is running and may receive the PSSCH from the transmitting UE.

For example, *SL drx-RetransmissionTimer* may be information on the maximum duration until a retransmission is received. For example, *SL drx-RetransmissionTimer* may be configured per HARQ process.

For example, *SL drx-LongCycleStartOffset* may be information on the Long DRX cycle and *drx-StartOffset* which defines the subframe where the Long and Short DRX Cycle starts.

For example, *SL drx-ShortCycle* may be information on the Short DRX cycle. For example, *SL drx-ShortCycle* may be optional information.

For example, *SL drx-ShortCycleTimer* may be information on the duration the UE shall follow the Short DRX cycle. For example, *SL drx-ShortCycleTimer* may be optional information.

For example, *SL drx-HARQ-RTT-Timer* may be information on the minimum duration before an assignment for HARQ retransmission is expected by the MAC entity. For example, *SL drx-HARQ-RTT-Timer* may be configured per HARQ process.

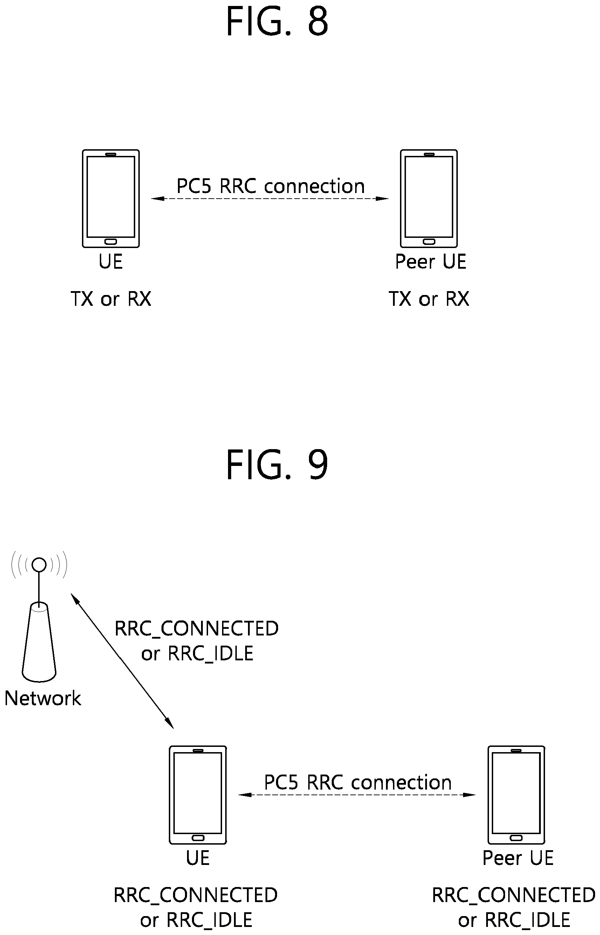

FIG. 8 shows an example of performing a PC5 RRC connection between a UE and a peer UE, based on an embodiment of the present disclosure. The embodiment of FIG. 8 may be combined with various embodiments of the present disclosure.

Meanwhile, in the present disclosure, the peer UE may be a UE configured with the PC5 RRC connection/PC5-signaling for unicast communication. The peer UE may be a UE attempting setup for the PC5 RRC connection/PC5-signaling for unicast communication. The peer UE may be a UE in progress of setup for the PC5 RRC connection/PC5-signaling for unicast communication. For example, the UE may perform transmission/reception for sidelink (SL) data transmission, and the peer UE may perform transmission/reception. Therefore, the UE may allocate a SL DRX configuration to the peer UE, and conversely, the peer UE may also allocate a SL DRX configuration to the UE. The operation of the UE mentioned in the present disclosure may be applied to the peer UE as it is. The TX UE and the RX UE mentioned in the present disclosure may be applied to both the UE and the peer UE. In addition, in the present disclosure, all operations and procedures applied by the UE to the peer UE may be applied by the peer UE to the UE as it is.

Based on an embodiment of the present disclosure, if the following conditions are satisfied, the UE may request determination related to a SL DRX configuration from another UE, or the UE may configure a SL DRX configuration based on the conditions listed below.

For example, when a UE A (e.g., TX UE) performs packet transmission to a UE B by using a wake-up time pattern, the UE A may perform congestion control based on a congestion level value (e.g., channel busy ratio (CBR)) measured on the wake-up time pattern. Herein, for example, the wake-up time pattern may be specific to at least one of an L2 source/destination ID pair, an L2 destination ID, a PC5 QoS indicator (PQI) parameter, or a QoS requirement related to an associated service. In addition, for example, if the UE A (e.g., TX UE) receives a congestion level value (hereinafter, WT_CBR) measured on the wake-up time pattern from the UE B (e.g., RX UE), the UE A may perform congestion control based on the WT_CBR value when the UE A performs packet transmission to the UE B by using the wake-up time pattern. Herein, for example, the PQI may be a specific 5QI that is used as a reference for PC5 QoS characteristics. For example, the 5QI may be a parameter for referencing 5G QoS characteristics (i.e., parameters related to QoS flows).

For example, the condition described above (e.g., whether the congestion level value measured on the wake-up time pattern exceeds a pre-configured threshold level) may be a triggering condition for the UE A (e.g., TX UE) to perform transmission of a reconfigured wake-up time pattern to the UE B (e.g., RX UE). For example, the condition described above (e.g., whether the congestion level value measured on the wake-up time pattern exceeds a pre-configured threshold level) may be a triggering condition for the UE B (e.g., RX UE) to perform transmission of its updated preferred wake-up time pattern to the UE A (e.g., TX UE).

Based on an embodiment of the present disclosure, a wake-up time pattern region may be partitioned based on a priority (range) of a packet to be transmitted (or received). For example, the wake-up time pattern region may be partitioned based on the priority range of the packet. Herein, for example, transmission of a packet with a high priority may be allowed not only in a wake-up time pattern sub-region configured for the packet with the high priority, but also in a wake-up time pattern sub-region configured for a packet with a low priority. For example, if the measured congestion level is lower than a pre-configured threshold, transmission of a packet with a high priority may be allowed not only in a wake-up time pattern sub-region configured for the packet with the high priority, but also in a wake-up time pattern sub-region configured for a packet with a low priority. That is, for example, transmission of a relatively lower priority packet may not be allowed in the wake-up time pattern sub-region configured for a relatively higher priority packet.

Meanwhile, in NR V2X, the discontinuous reception (DRX) operation may be performed. For example, if the UE in the mode 1/mode 2 performs the SL DRX configuration, the issue of how to align SL DRX and Uu DRX may arise. In the present disclosure, aligning Uu link DRX and SL DRX may mean that on-durations are adjacent from a timing perspective, and the UE wakes up once to receive a PDCCH/PSCCH or a PSCCH/PDCCH. Herein, for example, the adjacency may mean that on-durations of Uu link DRX and SL DRX are located on the time domain within a predetermined time (t>=0).

For example, a DRX configuration may be determined by a UE transmitting the DRX configuration from out-of-coverage. In this case, it may be an issue, for example, whether a pre-configuration and/or assistance information from a peer UE is also considered when determining the DRX configuration. Furthermore, for example, it may be necessary to define a condition for when the UE determines it and when the UE transmits it even when in-coverage.

In the present disclosure, it may be assumed that the UE performs SL reception and DRX operation, and the peer UE performs SL transmission operation. Both the UE and the peer UE may be considered in an RRC_IDLE/INACTIVE state or an RRC _CONNECTED state. In the present disclosure, for example, the "RX UE" may be a UE that transmits a DRX configuration. Herein, for example, the DRX configuration may be its own DRX configuration or a DRX configuration of the peer UE. For example, the "RX UE" may be a UE that receives a DRX configuration transmitted by the peer UE. In addition, for example, the "RX UE" may be a UE that transmits assistance information. Herein, for example, the assistance information may include at least one of traffic generation pattern/period/timing, selected resource/SL grant information, or information on an associated priority. For example, the assistance information may be its own assistance information or assistance information of the peer UE. For example, the "RX UE" may be a UE that receives assistance information transmitted by the peer UE.

Based on an embodiment of the present disclosure, the UE may transmit a DRX configuration or assistance information to the peer UE based on a specific condition.

For example, the UE (e.g., RX UE) may receive SL data from the peer UE (e.g., TX UE).

For example, the RX UE may transmit the DRX configuration or the assistance information to the TX UE based on at least one of the following conditions. For example, the TX UE may transmit the DRX configuration or the assistance information to the RX UE based on at least one of the following conditions.

For example, if a PC5 RRC connection is established, the UE may transmit the DRX configuration or the assistance information to the peer UE. For example, if the UE transmits a message related to an RRC reconfiguration sidelink to the peer UE to establish a connection, the UE may transmit the DRX configuration or the assistance information to the peer UE.

For example, if an RRC connection is released, the UE may transmit the DRX configuration or the assistance information to the peer UE. For example, if the UE receives an RRC release message from the network, the UE may transmit the DRX configuration or the assistance information to the peer UE. For example, if the RX UE transitions from the RRC_CONNECTED state to the RRX IDLE/RRCINACTIVE state, the UE (e.g., RX UE) may transmit the DRX configuration or the assistance information to the peer UE (e.g., TX UE). For example, if the RX UE transitions from the RRC_CONNECTED state to the RRX_IDLE/RRC_INACTIVE state, it may not need to align with Uu link.

For example, if radio link failure (RLF) occurs on Uu link, the UE may transmit the DRX configuration or the assistance information to the peer UE. For example, if the RX UE or the TX UE declares the RLF on the Uu link, the UE may transmit the DRX configuration or the assistance information to the peer UE.

For example, if a reference pattern related to the alignment of a SL DRX wake-up time changes, the UE may transmit the DRX configuration or the assistance information to the peer UE. For example, if there is a change in a Uu DRX pattern to a paging monitoring occasion, the UE may transmit the DRX configuration or the assistance information to the peer UE.

For example, if a SL pool is changed, the UE may transmit the DRX configuration or the assistance information to the peer UE. For example, if a pool used in a Uu IDLE state is different from a pool used in a Uu RRC CONNETED state after receiving a SIB message, the UE may transmit the DRX configuration or the assistance information to the peer UE.

For example, if a MAC reset occurs, the UE may transmit the DRX configuration or the assistance information to the peer UE. For example, if a SL mode is changed, the UE may transmit the DRX configuration or the assistance information to the peer UE. For example, if the SL mode is changed from the mode 1 to the mode 2, the UE may transmit the DRX configuration or the assistance information to the peer UE. For example, if the SL pool is changed from a normal pool to an exceptional pool, the UE may transmit the DRX configuration or the assistance information to the peer UE. For example, if a TX resource pool or an RX resource pool is changed, the UE may transmit the DRX configuration or the assistance information to the peer UE. For example, if a transmission resource is reselected, the UE may transmit the DRX configuration or the assistance information to the peer UE.

For example, if resource reselection is triggered, the UE may transmit the DRX configuration or the assistance information to the peer UE. For example, if resource reselection is triggered for the peer UE, the UE may transmit the DRX configuration or the assistance information to the peer UE.

Based on an embodiment of the present disclosure, if the conditions described above are triggered and the RX UE transmits a SL DRX configuration, the RX UE may autonomously configure the SL DRX configuration and transmit the SL DRX configuration to the TX UE. For example, the RX UE may have received assistance information for the SL DRX configuration from the TX UE.

For example, the RX UE may request assistance information from the TX UE for the SL DRX configuration, and the TX UE may transmit the assistance information to the RX UE. For example, the assistance information may include at least one of information on paging DRX of the peer UE (e.g., information on a paging frame, a paging subframe, and/or a paging occasion), information on a preferred SL DRX configuration of the peer UE, information on a SL DRX configuration recommended by the peer UE to the UE and traffic information, information related to a camping cell ID of the peer UE, an indication of the absence of sidelink reception capability, or indication of transmission without reception although sidelink reception capability is present. For example, the traffic information may include at least one of a traffic generation pattern/period, a slot/timing offset, a traffic size, a traffic generation form (e.g., periodic, aperiodic), priority information related to the traffic, or requirements related to the traffic (e.g., target error rate, (remaining) latency budget).

Based on an embodiment of the present disclosure, if the conditions described above are triggered and the TX UE transmits a SL DRX configuration, the TX UE may receive assistance information for the SL DRX configuration from the RX UE, and the TX UE may transmit the SL DRX configuration to the RX UE based on the assistance information.

For example, the assistance information may include at least one of information on paging DRX of the UE (e.g., information on a paging frame, a paging subframe, and/or a paging occasion), information on a preferred SL DRX configuration of the UE, information on a SL DRX configuration recommended by the UE to the peer UE and traffic information, information related to a camping cell ID of the UE, an indication of the absence of sidelink reception capability, or indication of transmission without reception although sidelink reception capability is present. For example, the traffic information may include at least one of a traffic generation pattern/period, a slot/timing offset, a traffic size, a traffic generation form (e.g., periodic, aperiodic), priority information related to the traffic, or requirements related to the traffic (e.g., target error rate, (remaining) latency budget).

FIG. 9 shows an example of a PC5 RRC connection and an RRC state of a UE and a peer UE, based on an embodiment of the present disclosure. The embodiment of FIG. 9 may be combined with various embodiments of the present disclosure.

In the present disclosure, for example, the "recommended SL DRX configuration" may be the UE's own preferred SL DRX configuration signaled by the UE to the peer UE. For example, the "recommended SL DRX configuration" may be a SL DRX configuration, which is signaled by the UE to the peer UE, to be used by the UE or that is likely to be used by the UE in the future. For example, the "recommended SL DRX configuration" may be a preferred SL DRX configuration, from the LE's perspective, to be used by the peer UE. All operations with respect to the UE in the present disclosure may be applied as operations with respect to the peer UE.

Based on an embodiment of the present disclosure, if the UE is in an RRC_IDLE state or an RRC _INACTIVE state and the peer UE is in an RRC_IDLE state or an RRC_INACTIVE state, and if the TX UE determines DRX, the peer UE (e.g., RX UE) may transmit assistance information to the UE so that the UE (e.g., TX UE) can determine a SL DRX configuration. For example, the assistance information may include at least one of information on a preferred SL DRX configuration of the peer UE, information on a SL DRX configuration recommended by the peer UE to the UE, or traffic information of the peer UE. For example, the traffic information may include at least one of a traffic generation pattern/period, a slot/timing offset, a traffic size, a traffic generation form (e.g., periodic, aperiodic), priority information related to the traffic, or requirements related to the traffic (e.g., target error rate, (remaining) latency budget).

Based on an embodiment of the present disclosure, if the UE is in an RRC_IDLE state or an RRC_INACTIVE state and the peer UE is in an RRC_IDLE state or an RRC_INACTIVE state, and if the RX UE determines DRX, the UE (e.g., TX UE) may transmit assistance information to the peer UE (e.g., RX UE) so that the peer UE (e.g., RX UE) can determine a SL DRX configuration. For example, the assistance information may include at least one of information on a preferred SL DRX configuration of the UE, information on a SL DRX configuration recommended by the UE to the peer UE, or traffic information of the UE. For example, the traffic information may include at least one of a traffic generation pattern/period, a slot/timing offset, a traffic size, a traffic generation form (e.g., periodic, aperiodic), priority information related to the traffic, or requirements related to the traffic (e.g., target error rate, (remaining) latency budget).

For example, if an RRC state of the UE is changed from an IDLE state to a CONNECTED state, the base station related to the UE may need assistance information of the peer UE to perform alignment of Uu DRX and SL DRX. That is, if the RRC state of the UE transitions from the IDLE state to the CONNECTED state, the UE may request assistance information from the peer UE, and the UE may transmit the assistance information received from the peer UE to the base station. The base station may then perform the alignment of the Uu DRX and the SL DRX by considering the assistance information.

Based on an embodiment of the present disclosure, if the UE is in an RRC_CONNETED state and the peer UE is in an RRC_IDLE state or an RRC_INACTIVE state, and if the TX UE determines DRX, the UE may request assistance information from the peer UE under the following conditions.

For example, if an RRC state of the UE transitions while a PC5-RRC connection is established with the peer UE, the UE may request the assistance information from the peer UE. For example, if the UE transitions from the RRC _INACTIVE state or the RRC_IDLE state to the RRC_CONNECTED state while the PC5-RRC connection is established with the peer UE, the UE may request the assistance information from the peer UE. For example, if the UE is in the RRC _CONNECTED state, the UE may request the assistance information from the peer UE during the setup procedure for the PC5-RRC connection with the peer UE.

For example, the UE may receive the assistance information, and the UE may transmit the assistance information to the base station connected with the UE. For example, the assistance information may include at least one of information on a preferred SL DRX configuration of the peer UE, information on a SL DRX configuration recommended by the peer UE to the UE, or traffic information of the peer UE. For example, the traffic information may include at least one of a traffic generation pattern/period, a slot/timing offset, a traffic size, a traffic generation form (e.g., periodic, aperiodic), priority information related to the traffic, or requirements related to the traffic (e.g., target error rate, (remaining) latency budget).

For example, if the UE requests assistance information from the peer UE, the request may be configured in the following form. For example, assistance information may be requested from the peer UE by including a 1-bit indication (assistance information request) in a PC5 RRC message (e.g., RRCReconfigurationSidelink, UECapabilityEnquirySidelink). For example, the assistance information request may be defined as a separate PC5 RRC message. For example, the assistance information request may be defined as a PC5 signaling.

Based on an embodiment of the present disclosure, if the UE is in an RRC_CONNETED state and the peer UE is in an RRC_IDLE state or an RRC_INACTIVE state, and if the RX UE determines DRX, the UE may transmit assistance information to the peer UE under the following conditions.

For example, if the UE and the peer UE establish a PC5-RRC connection, the UE may transmit the assistance information to the peer UE. For example, if the peer UE requests the assistance information from the UE, the UE may transmit the assistance information to the peer UE.

For example, the UE may transmit the assistance information to the peer UE such that the peer UE can determine a DRX configuration. For example, the assistance information may include at least one of information on a preferred SL DRX configuration of the UE, information on a SL DRX configuration recommended by the UE to the peer UE, or traffic information of the UE. For example, the traffic information may include at least one of a traffic generation pattern/period, a slot/timing offset, a traffic size, a traffic generation form (e.g., periodic, aperiodic), priority information related to the traffic, or requirements related to the traffic (e.g., target error rate, (remaining) latency budget).

For example, if the UE transmit assistance information to the peer UE, the assistance information may be included in a PC5 RRC message (e.g., RRCReconfigurationSidelink, UECapabilityEnquirySidelink). For example, the assistance information message may be defined as a separate PC5 RRC message. For example, the assistance information message may be defined as a PC5 signaling.

Additionally, for example, if an RRC state of the UE is changed from an IDLE state to a CONNECTED state, the base station connected with the UE may determine a Uu DRX configuration and transmit the Uu DRX configuration to the UE. In this case, the UE may need assistance information from the peer UE to determine a SL DRX configuration based on the Uu DRX configuration received from the base station. That is, for example, if the RRC state of the UE is changed from the IDLE state to the CONNECTED state, the UE may request the assistance information from the peer UE, and the UE may determine the SL DRX configuration based on the assistance information received from the peer UE and the Uu DRX configuration received from the base station connected with the UE. The UE may then transmit the SL DRX configuration to the peer UE or the base station.

Meanwhile, in order for the UE to transmit SL data to the peer UE, it may be necessary for the UE to configure a SL DRX configuration to the peer UE.

Based on an embodiment of the present disclosure, in order for the UE to configure a SL DRX configuration to the peer UE, the UE may transmit an assistance information request message for requesting assistance information to the peer UE. Thereafter, the UE may keep an active state to receive a response. For example, the assistance information request message may include at least one of a sidelink traffic periodicity of the TX UE, a delay budget of a SL packet, a priority of a SL traffic, an ID related to a SL traffic (e.g., Provider Service ID (PSID)), or an indication for assistance information request. Further, for example, the assistance information request message may include a plurality of pieces of information described above. For example, the delay budget may be a remaining packet delay budget.

For example, based on information included in the assistance information request message, the peer UE may transmit information on a recommended SL DRX to the UE. If the peer UE transmits a plurality of SL DRX configurations to the UE, the peer UE may transmit the SL DRX configurations according to the priority and the preference, such that the UE may configure a preferred SL DRX configuration among the plurality of SL DRX configurations according to the priority and the preference. Alternatively, for example, the peer UE may transmit the UE only a simple indication to turn on/off SL DRX.

For example, the UE may include information related to the following range configuration for the SL DRX configuration in the assistance information request message and transmit it to the peer UE. For example, the information related to range configuration may include at least one of a minimum SL short DRX cycle and a variable offset range, a minimum SL long DRX cycle and a variable offset range, a minimum active time and a variable offset range, a minimum inactive time and a variable offset range, or a variable SL DRX slot offset range.

For example, based on the information related to the range configuration, the peer UE may transmit a configuration range for the SL DRX configuration to the UE.

For example, if a DRX configuration related to the peer UE is changed, it may be difficult for the UE or the base station connected with the UE to determine the changed DRX configuration. Therefore, it may be necessary for the peer UE to transmit assistance information to the UE without a request for the assistance information.

Based on an embodiment of the present disclosure, the peer UE (e.g., RX UE) may transmit assistance information to the TX UE without a request for the assistance information from the TX UE based on specific conditions.

For example, if Uu DRX of the RX UE is changed, the RX UE may transmit the assistance information to the TX UE. For example, if the RX UE performs an RRC reconfiguration, the RX UE may transmit the assistance information to the TX UE. For example, if a SL-DRX configuration of the RX UE is changed, the RX UE may transmit the assistance information to the TX UE. For example, if a PC5 connection is released, the RX UE may transmit the assistance information to the TX UE. For example, if the RX UE that is in an active state intends to perform SL DRX operation, the RX UE may transmit the assistance information to the TX UE. For example, if a configured sidelink resource pool of the RX UE is changed, the RX UE may transmit the assistance information to the TX UE. For example, if the RX UE turns off SL DRX because another TX UE is a UE that cannot perform SL DRX (e.g., Release-16 UE), the RX UE may transmit the assistance information to the TX UE. For example, if SL DRX is turned off, the RX UE may transmit the assistance information to the TX UE.

For example, if the UE receives assistance information from the peer UE, the UE may transmit a response message for the assistance information to the peer UE. For example, if the UE receives the assistance information from the peer UE without a request for the assistance information, the UE may transmit the response message for the assistance information to the peer UE. For example, if the UE configure a SL DRX configuration based on the assistance information, the UE may transmit a confirmation message to the peer UE. For example, if the UE finds it difficult to configure a SL DRX configuration based on the assistance information, the UE may transmit a message requesting to keep the current SL DRX to the peer UE.

For example, if the UE transmits a SL DRX configuration through a message related to RRC reconfiguration (e.g., an RRC reconfiguration sidelink message), the UE may keep an active state until a response to the message related to RRC reconfiguration is received from the peer UE. That is, for example, the UE may keep the active state while a timer related to the RRC message (e.g., T400) is running.

In various embodiments of the present disclosure, the SL DRX timer may be used for the following purposes.

For example, the SL DRX on-duration timer may be used in a duration in which a UE performing SL DRX operation basically needs to operate in active time in order to receive a PSCCH/PSSCH of a counterpart UE.

For example, the SL DRX inactivity timer may be used in a duration for extending the SL DRX on-duration, which is a duration in which a UE performing SL DRX operation should basically operate in active time to receive a PSCCH/PSSCH of a counterpart UE. That is, for example, the SL DRX on-duration timer may be extended by the SL DRX inactivity timer duration. In addition, if the UE receives a new packet (e.g., new PSSCH) from the counterpart UE, the UE may start the SL DRX inactivity timer to extend the SL DRX on-duration timer.

For example, the SL DRX HARQ RTT timer may be used in a duration in which a UE operates in a sleep mode until the UE performing SL DRX operation receives a retransmission packet (or PSSCH assignment) transmitted from a counterpart UE. That is, for example, if the UE starts the SL DRX HARQ RTT timer, the UE may determine that the counterpart UE will not transmit any sidelink retransmission packet to the UE until the SL DRX HARQ RTT timer expires, and may operate in the sleep mode while the timer is running.

For example, the SL DRX retransmission timer may be used in a duration in which a UE performing SL DRX operation operates in an active mode to receive a retransmission packet (or PSSCH assignment) transmitted from a counterpart UE. For example, while the SL DRX retransmission timer is running, the UE may monitor reception of a retransmission sidelink packet (or PSSCH allocation) transmitted by the counterpart UE.

Various embodiments of the present disclosure may be used to solve a problem in which a loss occurs due to an interruption occurring when Uu BWP switching.

Also, for example, if a UE supports multiple SL BWPs, it may be used to solve a problem in which a loss occurs due to an interruption occurring when SL BWP switching.

The various embodiments of the present disclosure can be applied for a UE-pair specific SL DRX configuration, a UE-pair specific SL DRX pattern, a parameter included in the UE-pair specific SL DRX configuration, or a timer included in the UE-pair specific SL DRX configuration, as well as a default/common SL DRX configuration, a default/common SL DRX pattern, a parameter included in the default/common SL DRX configuration or a timer included in the default/common SL DRX configuration.

In addition, in the present disclosure, for example, 'on-duration' may be active time duration (the duration operating in a wake-up state (an RF module is "on") to receive/transmit a wireless signal). For example, 'off-duration' may be a sleep time duration (the duration operating in a sleep mode (an RF module is "off") for power saving, wherein the transmitting UE may not operate in the sleep mode during the sleep time duration, and wherein if necessary, even in the sleep time, it may be allowed to operate in active time for a moment for a sensing operation/transmission operation). In addition, for example, whether various embodiments of the present disclosure are applied may be configured differently or independently, based on a resource pool, a congestion level, a service priority, a service type, a QoS requirement (e.g., latency, reliability), PQI, a traffic type (e.g., periodic generation, aperiodic generation), or SL transmission resource allocation mode (mode 1, mode 2). For example, parameters (e.g., threshold) related to various embodiments of the present disclosure may be configured differently or independently, based on a resource pool, a congestion level, a service priority, a service type, a QoS requirement (e.g., latency, reliability), PQI, a traffic type (e.g., periodic generation, aperiodic generation), or SL transmission resource allocation mode (mode 1, mode 2).

For example, whether or not various embodiments of the present disclosure are applied may be configured differently or independently, based on at least one of a resource pool (e.g., a resource pool in which a PSFCH is configured, a resource pool in which a PSFCH is not configured), a service/packet type, a priority, a QoS requirement (e.g., URLLC/EMBB traffic, reliability, latency), PQI, PC5 QoS Flow Identifier (PFI), a cast type (e.g., unicast, groupcast, broadcast), a congestion level (e.g., CBR), a resource pool congestion level, a SL HARQ feedback scheme (e.g., NACK only feedback scheme, ACK/NACK feedback scheme), MAC PDU transmission with HARQ feedback enabled, MAC PDU transmission with HARQ feedback disabled, whether PUCCH-based SL HARQ feedback reporting operation is configured, whether to perform pre-emption, whether to perform re-evaluation, pre-emption based resource re-selection, re-evaluation based resource re-selection, an L1 source identifier, an L1 destination identifier, an L2 source identifier, an L2 destination identifier, a combination identifier of an L1 source layer ID and an L1 destination layer ID, a combination identifier of an L2 source layer ID and an L2 destination layer ID, a combination identifier of a pair of an L1 source layer ID and an L1 destination layer ID and a cast type, a combination identifier of a pair of an L2 source layer ID and an L2 destination layer ID and a cast type, PC5 RRC connection/link, whether to perform SL DRX, whether to support SL DRX, a SL mode type (resource allocation mode 1, resource allocation mode 2), periodic resource reservation, or aperiodic resource reservation. Herein, for example, the PFI may refer to an identifier for a PC5 QoS flow.

For example, parameter configuration values related to various embodiments of the present disclosure may be configured differently or independently, based on at least one of a resource pool (e.g., a resource pool in which a PSFCH is configured, a resource pool in which a PSFCH is not configured), a service/packet type, a priority, a QoS requirement (e.g., URLLC/EMBB traffic, reliability, latency), PQI, PFI, a cast type (e.g., unicast, groupcast, broadcast), a congestion level (e.g., CBR), a resource pool congestion level, a SL HARQ feedback scheme (e.g., NACK only feedback scheme, ACK/NACK feedback scheme), MAC PDU transmission with HARQ feedback enabled, MAC PDU transmission with HARQ feedback disabled, whether PUCCH-based SL HARQ feedback reporting operation is configured, whether to perform pre-emption, whether to perform re-evaluation, pre-emption based resource re-selection, re-evaluation based resource re-selection, an L1 source identifier, an L1 destination identifier, an L2 source identifier, an L2 destination identifier, a combination identifier of an L1 source layer ID and an L1 destination layer ID, a combination identifier of an L2 source layer ID and an L2 destination layer ID, a combination identifier of a pair of an L1 source layer ID and an L1 destination layer ID and a cast type, a combination identifier of a pair of an L2 source layer ID and an L2 destination layer ID and a cast type, PC5 RRC connection/link, whether to perform SL DRX, whether to support SL DRX, a SL mode type (resource allocation mode 1, resource allocation mode 2), periodic resource reservation, or aperiodic resource reservation.

In the present disclosure, for example, "specific time" may be a time in which the UE operates in active time for a predefined time in order to receive a sidelink signal or sidelink data from a counterpart/peer UE. For example, "specific time" may be a time in which the UE operates in active time as long as a timer (e.g., a SL DRX retransmission timer, a SL DRX inactivity timer, a timer for operating the RX UE in active time in the DRX operation) time to receive a sidelink signal or sidelink data from a counterpart/peer UE.

Various embodiments of the present disclosure may be applied to millimeter wave (mmWave) SL operation. Whether various embodiments of the present disclosure are applied may be applied to millimeter wave (mmWave) SL operation. Parameter configuration values related to various embodiments of the present disclosure may be applied to millimeter wave (mmWave) SL operation.

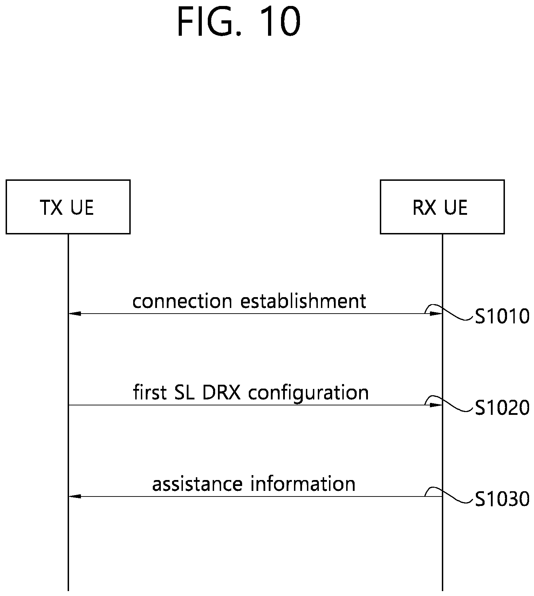

FIG. 10 shows a procedure for transmitting, by a receiving UE, assistance information to a transmitting UE, based on an embodiment of the present disclosure. The embodiment of FIG. 10 may be combined with various embodiments of the present disclosure.

Referring to FIG. 10, in step S1010, a connection between the transmitting UE and the receiving UE may be established. In step S 1020, the receiving UE may receive a first sidelink (SL) discontinuous reception (DRX) configuration including information related to a SL DRX cycle and information related to an on-duration timer from the transmitting UE. In step S1030, the receiving UE may transmit assistance information to the transmitting UE based on a change of a configuration related to DRX for the receiving UE. For example, the assistance information may include information related to SL DRX.

For example, the receiving UE may receive a response message for the assistance information from the transmitting UE. For example, based on that the response message is an acceptance message for the assistance information, a second SR DRX configuration may be determined based on the assistance information. For example, the receiving UE may receive the second SL DRX configuration from the transmitting UE. For example, the receiving UE may receive the second SL DRX configuration from the transmitting UE through a message related to RRC reconfiguration. For example, based on transmission of the second SL DRX configuration, the transmitting UE may keep an active time.

For example, the response message may be a message requesting maintenance of the first SL DRX configuration. For example, based on the message requesting maintenance of the first SL DRX configuration, the receiving UE may perform SL communication with the transmitting UE based on the first SL DRX configuration.

For example, based on receiving a message requesting the assistance information from the transmitting UE, the receiving UE may transmit the assistance information to the transmitting UE. For example, the message requesting the assistance information may include information related to SL traffic. For example, the information related to SL traffic may include at least one of a sidelink traffic period, a delay budget of a SL packet, a priority of the SL traffic, an ID related to the SL traffic (e.g., Provider Service ID (PSID)), or an indication for an assistance information request.

For example, the message requesting the assistance information may include range information related to a SL DRX configuration. For example, the range information related to the SL DRX configuration may include at least one of a minimum SL short DRX cycle and a variable offset range, a minimum SL long DRX cycle and a variable offset range, a minimum active time and a variable offset range, a minimum inactive time and a variable offset range, or a variable SL DRX slot offset range.

For example, the configuration related to the DRX may be the first SL DRX configuration related to the receiving UE.

For example, the configuration related to the DRX may be a Uu DRX configuration related to the receiving UE.

For example, the assistance information may include information on a recommended SL DRX configuration. For example, if the receiving UE transmits a plurality of recommended SL DRX configurations to the transmitting UE, the receiving UE may transmit a SL DRX configuration recommended according to a priority and a preference such that the transmitting UE configures a prioritized SL DRX configuration according to the priority and the preference among the plurality of recommended SL DRX configurations.

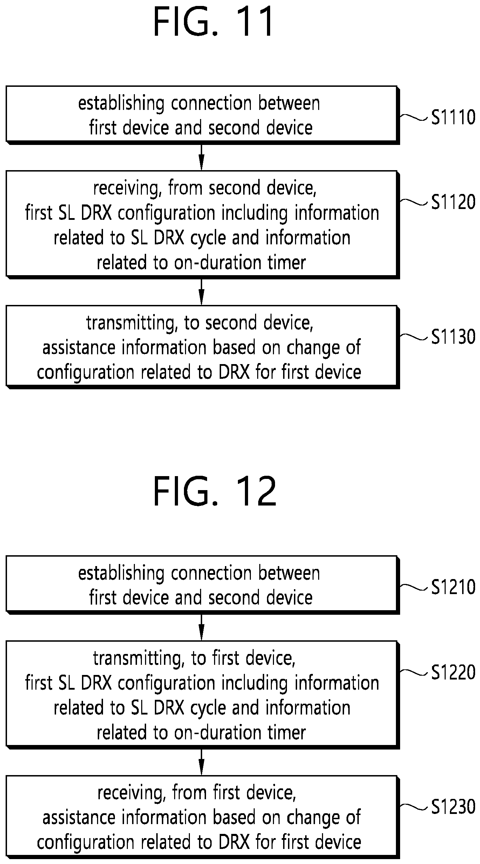

FIG. 11 shows a procedure for transmitting, by a first device, assistance information to a second device, based on an embodiment of the present disclosure. The embodiment of FIG. 11 may be combined with various embodiments of the present disclosure.

Referring to FIG. 11, in step S1110, a connection between the first device 100 and the second device 200 may be established. In step S1120, the first device 100 may receive a first sidelink (SL) discontinuous reception (DRX) configuration including information related to a SL DRX cycle and information related to an on-duration timer from the second device 200. In step S1130, the first device 100 may transmit assistance information to the second device 200 based on a change of a configuration related to DRX for the first device 100. For example, the assistance information may include information related to SLDRX.

For example, the first device 100 may receive a response message for the assistance information from the second device 200. For example, based on that the response message is an acceptance message for the assistance information, the second SR DRX configuration may be determined based on the assistance information. For example, the first device 100 may receive the second SL DRX configuration from the second device 200. For example, the first device 100 may receive the second SL DRX configuration from the second device 200 through a message related to RRC reconfiguration. For example, based on transmission of the second SL DRX configuration, the first device 100 may keep an active time.

For example, the response message may be a message requesting maintenance of the first SL DRX configuration. For example, based on the message requesting maintenance of the first SL DRX configuration, the first device 100 may perform SL communication with the second device 200 based on the first SL DRX configuration.

For example, based on receiving a message requesting the assistance information from the second device 200, the first device 100 may transmit the assistance information to the second device 200. For example, the message requesting the assistance information may include information related to SL traffic. For example, the information related to SL traffic may include at least one of a sidelink traffic period, a delay budget of a SL packet, a priority of the SL traffic, an ID related to the SL traffic (e.g., Provider Service ID (PSID)), or an indication for an assistance information request.

For example, the message requesting the assistance information may include range information related to a SL DRX configuration. For example, the range information related to the SL DRX configuration may include at least one of a minimum SL short DRX cycle and a variable offset range, a minimum SL long DRX cycle and a variable offset range, a minimum active time and a variable offset range, a minimum inactive time and a variable offset range, or a variable SL DRX slot offset range.

For example, the configuration related to the DRX may be the first SL DRX configuration related to the first device 100.

For example, the configuration related to the DRX may be a Uu DRX configuration related to the first device 100.

For example, the assistance information may include information on a recommended SL DRX configuration. For example, if the first device 100 transmits a plurality of recommended SL DRX configurations to the second device 200, the first device 100 may transmit a SL DRX configuration recommended according to a priority and a preference such that the second device 200 configures a prioritized SL DRX configuration according to the priority and the preference among the plurality of recommended SL DRX configurations.

The above-described embodiment can be applied to various devices described below. For example, the processor 102 of the first device 100 may control the transceiver 106 to establish a connection between the first device and the second device. In addition, for example, the processor 102 of the first device 100 may control the transceiver 106 to receive a first sidelink (SL) discontinuous reception (DRX) configuration including information related to a SL DRX cycle and information related to an on-duration timer from the second device. In addition, for example, the processor 102 of the first device 100 may control the transceiver 106 to transmit assistance information to the second device based on a change of a configuration related to DRX for the first device.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: establish a connection between the first device and a second device; receive, from the second device, a first sidelink (SL) discontinuous reception (DRX) configuration including information related to a SL DRX cycle and information related to an on-duration timer; and transmit, to the second device, assistance information based on a change of a configuration related to DRX for the first device. For example, the assistance information may include information related to SL DRX.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: establish a connection between the first UE and a second UE; receive, from the second UE, a first sidelink (SL) discontinuous reception (DRX) configuration including information related to a SL DRX cycle and information related to an on-duration timer; and transmit, to the second UE, assistance information based on a change of a configuration related to DRX for the first UE. For example, the assistance information may include information related to SLDRX.

Based on an embodiment of the present disclosure, a non-transitory computer-readable storage medium storing instructions may be provided. For example, the instructions, when executed, may cause a first device to: establish a connection between the first device and a second device; receive, from the second device, a first sidelink (SL) discontinuous reception (DRX) configuration including information related to a SL DRX cycle and information related to an on-duration timer; and transmit, to the second device, assistance information based on a change of a configuration related to DRX for the first device. For example, the assistance information may include information related to SL DRX.

FIG. 12 shows a procedure for receiving, by a second device, assistance information from a first device, based on an embodiment of the present disclosure. The embodiment of FIG. 12 may be combined with various embodiments of the present disclosure.

Referring to FIG. 12, in step S1210, a connection between the first device 100 and the second device 200 may be established. In step S1220, the second device 200 may transmit a first sidelink (SL) discontinuous reception (DRX) configuration including information related to a SL DRX cycle and information related to an on-duration timer to the first device 100. In step S1230, the second device 200 may receive assistance information from the first device 100 based on a change of a configuration related to DRX for the first device 100. For example, the assistance information may include information related to SL DRX.

For example, the second device 200 may transmit a response message for the assistance information to the first device 100. For example, based on that the response message is an acceptance message for the assistance information, the second SR DRX configuration may be determined based on the assistance information. For example, the second device 200 may transmit the second SL DRX configuration to the second device 100. For example, the second device 200 may transmit the second SL DRX configuration to the first device 200 through a message related to RRC reconfiguration. For example, based on transmission of the second SL DRX configuration, the first device 100 may keep an active time.

For example, the response message may be a message requesting maintenance of the first SL DRX configuration. For example, based on the message requesting maintenance of the first SL DRX configuration, the first device 100 may perform SL communication with the second device 200 based on the first SL DRX configuration.

For example, based on receiving a message requesting the assistance information from the second device 200, the first device 100 may transmit the assistance information to the second device 200. For example, the message requesting the assistance information may include information related to SL traffic. For example, the information related to SL traffic may include at least one of a sidelink traffic period, a delay budget of a SL packet, a priority of the SL traffic, an ID related to the SL traffic (e.g., Provider Service ID (PSID)), or an indication for an assistance information request.

For example, the message requesting the assistance information may include range information related to a SL DRX configuration. For example, the range information related to the SL DRX configuration may include at least one of a minimum SL short DRX cycle and a variable offset range, a minimum SL long DRX cycle and a variable offset range, a minimum active time and a variable offset range, a minimum inactive time and a variable offset range, or a variable SL DRX slot offset range.

For example, the configuration related to the DRX may be the first SL DRX configuration related to the first device 100.

For example, the configuration related to the DRX may be a Uu DRX configuration related to the first device 100.

For example, the assistance information may include information on a recommended SL DRX configuration. For example, if the first device 100 transmits a plurality of recommended SL DRX configurations to the second device 200, the first device 100 may transmit a SL DRX configuration recommended according to a priority and a preference such that the second device 200 configures a prioritized SL DRX configuration according to the priority and the preference among the plurality of recommended SL DRX configurations.

The above-described embodiment can be applied to various devices described below. For example, the processor 202 of the second device 200 may control the transceiver 206 to transmit a configuration related to SL DRX to the first device 100. In addition, for example, the processor 202 of the second device 200 may control the transceiver 206 to perform SL DRX based on the configuration related to SL DRX and a profile related to transmission.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: establish a connection between a first device and the second device; transmit, to the first device, a first sidelink (SL) discontinuous reception (DRX) configuration including information related to a SL DRX cycle and information related to an on-duration timer; and receive, from the first device, assistance information based on a change of a configuration related to DRX for the first device. For example, the assistance information may include information related to SL DRX.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

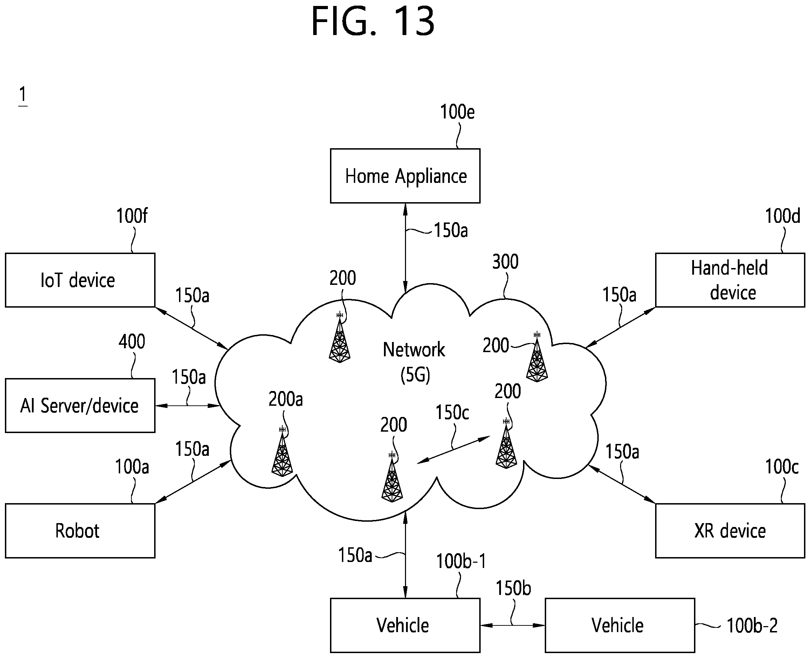

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

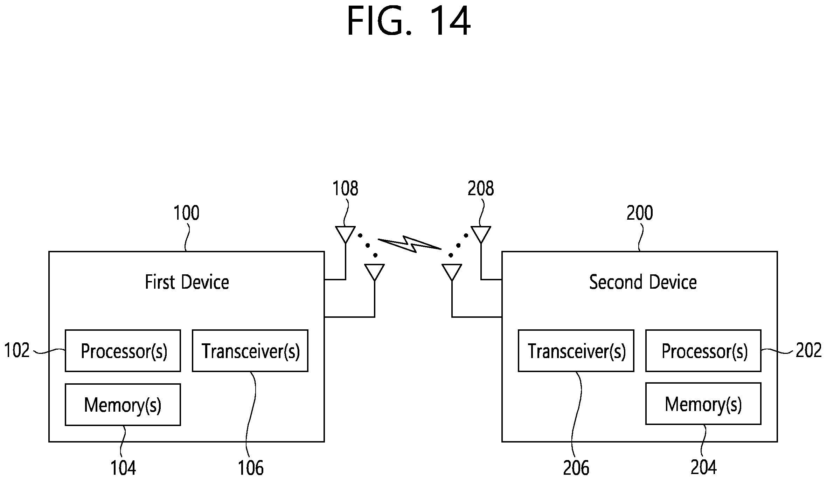

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

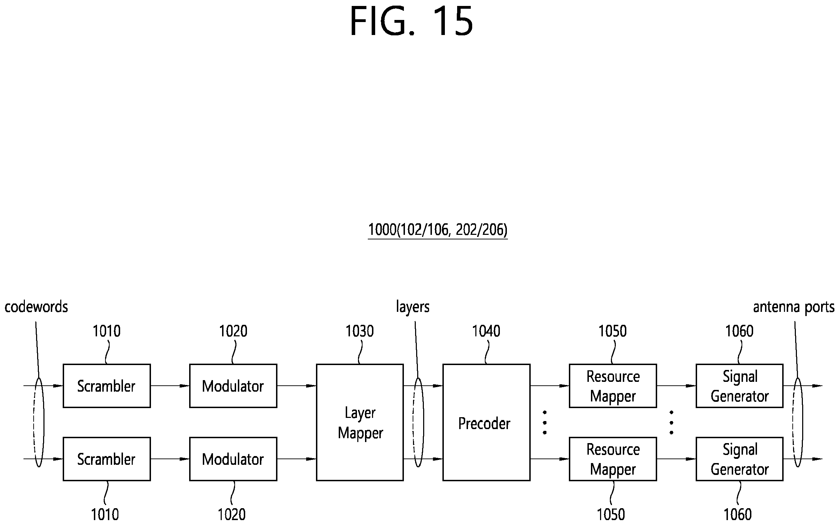

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

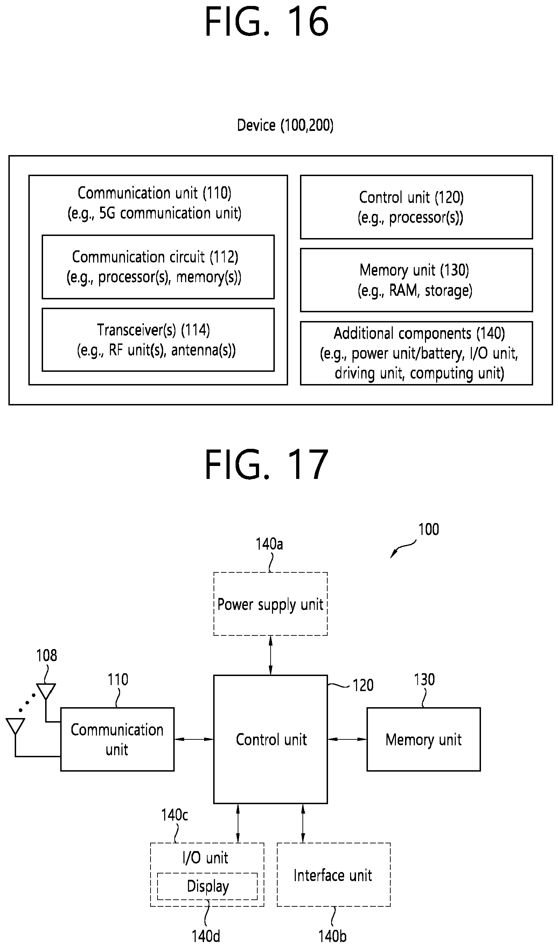

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

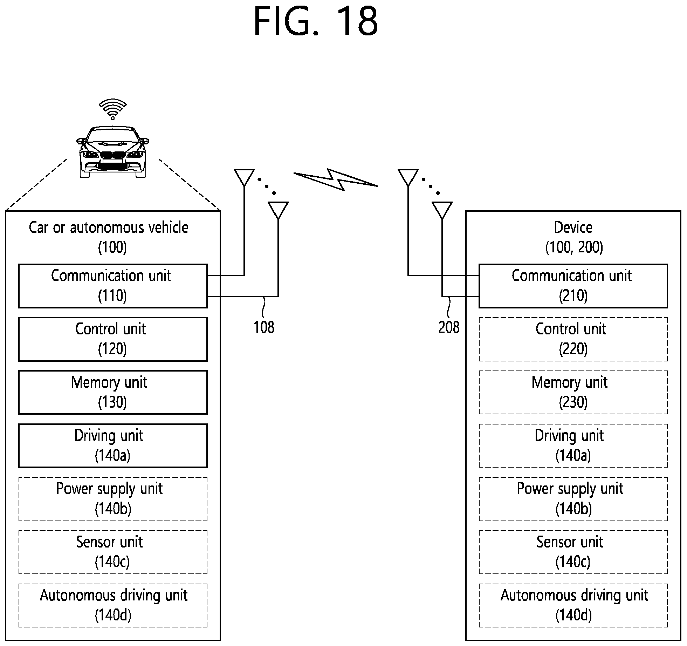

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
establishing a connection between the first device and a second device;
receiving, from the second device, a first sidelink (SL) discontinuous reception (DRX) configuration including information related to a SL DRX cycle and information related to an on-duration timer; and
transmitting, to the second device, assistance information based on a change of a configuration related to DRX for the first device,
wherein the assistance information includes information related to SL DRX.

2. The method of claim 1, further comprising:
receiving, from the second device, a response message for the assistance information.

3. The method of claim 2, wherein, based on that the response message is an acceptance message for the assistance information, a second SL DRX configuration is determined based on the assistance information.

4. The method of claim 3, further comprising:
receiving, from the second device, the second SL DRX configuration.

5. The method of claim 4, wherein the second SL DRX configuration is received through a message related to radio resource control (RRC) reconfiguration from the second device.

6. The method of claim 4, wherein, based on transmission of the second SL DRX configuration, the second device keeps an active time.

7. The method of claim 2, wherein the response message is a message requesting maintenance of the first SL DRX configuration.

8. The method of claim 1, wherein, based on receiving a message requesting the assistance information from the second device, the assistance information is transmitted to the second device.

9. The method of claim 8, wherein the message requesting the assistance information includes information related to SL traffic.

10. The method of claim 8, wherein the message requesting the assistance information includes range information related to a SL DRX configuration.

11. The method of claim 1, wherein the configuration related to the DRX is the first SL DRX configuration related to the first device.

12. The method of claim 1, wherein the configuration related to the DRX is a Uu DRX configuration related to the first device.

13. The method of claim 1, wherein the assistance information includes information on a recommended SL DRX configuration.

14. A first device adapted to perform wireless communication, the first device comprising:
one or more memories storing instructions;
one or more transceivers; and
one or more processors connected to the one or more memories and the one or more transceivers, wherein the one or more processors execute the instructions to:
establish a connection between the first device and a second device;
receive, from the second device, a first sidelink (SL) discontinuous reception (DRX) configuration including information related to a SL DRX cycle and information related to an on-duration timer; and
transmit, to the second device, assistance information based on a change of a configuration related to DRX for the first device,
wherein the assistance information includes information related to SL DRX.

15. An apparatus adapted to control a first user equipment (UE), the apparatus comprising:
one or more processors; and
one or more memories operably connected to the one or more processors and storing instructions, wherein the one or more processors execute the instructions to:
establish a connection between the first UE and a second UE;
receive, from the second UE, a first sidelink (SL) discontinuous reception (DRX) configuration including information related to a SL DRX cycle and information related to an on-duration timer; and
transmit, to the second UE, assistance information based on a change of a configuration related to DRX for the first UE,
wherein the assistance information includes information related to SL DRX.

16. A non-transitory computer-readable storage medium storing instructions that, when executed, cause a first device to:
establish a connection between the first device and a second device;
receive, from the second device, a first sidelink (SL) discontinuous reception (DRX) configuration including information related to a SL DRX cycle and information related to an on-duration timer; and
transmit, to the second device, assistance information based on a change of a configuration related to DRX for the first device,
wherein the assistance information includes information related to SL DRX.

17. A method for performing wireless communication by a second device, the method comprising:
establishing a connection between a first device and the second device;
transmitting, to the first device, a first sidelink (SL) discontinuous reception (DRX) configuration including information related to a SL DRX cycle and information related to an on-duration timer; and
receiving, from the first device, assistance information based on a change of a configuration related to DRX for the first device,
wherein the assistance information includes information related to SL DRX.

18. The method of claim 17, further comprising:
transmitting, to the first device, a response message for the assistance information.

19. A second device adapted to perform wireless communication, the second device comprising:
one or more memories storing instructions;
one or more transceivers; and
one or more processors connected to the one or more memories and the one or more transceivers, wherein the one or more processors execute the instructions to:
establish a connection between a first device and the second device;
transmit, to the first device, a first sidelink (SL) discontinuous reception (DRX) configuration including information related to a SL DRX cycle and information related to an on-duration timer; and
receive, from the first device, assistance information based on a change of a configuration related to DRX for the first device,
wherein the assistance information includes information related to SL DRX.

20. The second device of claim 19, wherein a response message for the assistance information is transmitted to the first device.
